# EUROPÄISCHE PATENTSCHRIFT

(11) **EP 1 957 844 B1**
(45) Veröffentlichungstag und Bekanntmachung des Hinweises auf die Patenterteilung: **23.06.2010**
(21) Anmeldenummer: 06805762.9
(22) Anmeldetag: 19.09.2006
(51) Int. Cl.: F16L 3/10, H02G 3/22

(54) **EINSATZELEMENT FÜR ROHRSCHELLEN SOWIE ROHRSCHELLE FÜR DIE AUFNAHME EINES SOLCHEN EINSATZELEMENTES**
INSERT ELEMENT FOR PIPE CLAMPS, AND PIPE CLAMP FOR ACCOMMODATING SUCH AN INSERT ELEMENT
ELEMENT D'INSERTION POUR COQUILLES TUBULAIRES ET COQUILLES TUBULAIRES DESTINEES A RECEVOIR UN TEL ELEMENT D'INSERTION

(30) Priorität: 06.12.2005 DE 102005058063
(43) Veröffentlichungstag der Anmeldung: 20.08.2008
(73) Patentinhaber: HYDAC Accessories GmbH, 66280 Sulzbach/Saar (DE)
(72) Erfinder: EVEN, Rainer, 66123 Saarbrücken (DE)
(74) Vertreter: Bartels, Martin Erich Arthur
(86) Internationale Anmeldenummer: PCT/EP2006/009075
(87) Internationale Veröffentlichungsnummer: WO 2007/065494

(56) Entgegenhaltungen:
- EP-A1- 1 388 699
- WO-A-03/052895
- WO-A-2004/112211
- DE-B3- 10 313 306
- DE-U1- 8 030 416
- DE-U1- 20 104 279
- US-A- 3 559 933
- US-A- 5 697 194

## Beschreibung

Die Erfindung bezieht sich auf ein Einsatzelement für Rohrschellen gemäß der Merkmalsausgestaltung des Oberbegriffes des Patentanspruches 1 sowie auf eine Aufnahme für ein solches Element gemäß der Merkmalsausgestaltung des Oberbegriffs des Patentanspruches 8.

Rohrschellen dieser oder vergleichbarer Art finden in mannigfaltiger Ausgestaltung für viele Anwendungszwecke Verwendung. Insbesondere dienen sie der Fixierung von rohr- oder schlauchartigen Bauelementen oder anderer strangartiger Bauteile, etwa auch elektrischer Leitungen. Je nach Art, Verwendungszweck oder Durchmesser der betreffenden, zu fixierenden Bauelemente kommen bei Bedarf Einsatzelemente unterschiedlicher Art und Größe zur Anwendung. Wenn an einer betreffenden Montagestelle Rohre oder andere Leitungselemente unterschiedlicher Außendurchmesser gesichert werden sollen, ist man in nachteiliger Weise gezwungen, Einsatzelemente in entsprechender Größenabstufung vorzuhalten, um die in Frage kommenden Durchmesserbereiche mit einheitlichen Grundbestandteilen der Schelle abdecken zu können, d.h. mit gleich ausgebildeten Spannkörpern.

Durch die EP 1 388 699 A1 ist eine Rohrschelle bekannt mit zwei gleich ausgebildeten Spannkörpern, die zwischen sich Aufnahmekanäle verschiedenen, aber gleichbleibendem Durchmessers begrenzen zwecks Aufnahme von rohr- oder schlauchartigen Bauelementen. Die beiden Spannkörper lassen sich an ihren beiden gegenüberliegenden freien Enden jeweils über eine Schraubverbindung zum Herbeiführen einer Klemmung für die Bauelemente miteinander verbinden und über ein- und ausfahrbare Clipnasen läßt sich der dahingehende Rohrschellenverbund an sonstigen feststehenden Baukomponenten lösbar festlegen. Der jeweilige Aufnahmekanalteil eines Spannkörpers, der zusammen mit dem Aufnahmekanalteil des gegenüberliegenden Spannkörpers den Aufnahmekanal bildet, weist drei jeweils konzentrisch zueinander angeordnete Einsatzelementen auf, wobei ein mittleres elastisch nachgiebiges Einsatzelement zwischen zwei starren Einsatzelementen aufgenommen ist. Über das elastische Einsatzelement läßt sich insoweit eine Dämpfung für den aufgezeigten Rohrschellenverbund erreichen; jedoch sind alle Einsatzelemente unter Bildung von Anlagesitzen derart miteinander in Anlage, dass für einen Aufnahmekanal mit gleichem Durchmesser immer nur eine Art von rohr- oder schlauchartigem Bauelement aufnehmbar ist mit entsprechendem Durchmesser-Größenverhältnis. Eine universelle Verwendung der bekannten Rohrschelle in dem Sinne, dass man mit einem Aufnahmekanal der Rohrschelle verschiedene Durchmesserbereiche an aufzunehmenden Bauelementen abdecken kann, ist dergestalt nicht erreicht.

Zwar ist in der US 3 559 933 A bereits vorgeschlagen worden, im Sinne eines Baukastens für eine Rohrschelle zur Abdeckung verschiedener Durchmessserbereiche an aufzunehmenden Bauelementen neben einem Basisspannkörper weitere, auf diesen aufzusetzende Spannkörper als eine Art Einsatzelemente vorzusehen, die in gewinkelter oder gestufter Anordnung in einem relativ weiten Bereich unterschiedlichen Durchmesserverhältnissen anpaßbar sind; allein die Elemente dieses Baukastens können leicht verloren gehen und im übrigen sind die Einzelkomponenten an Spannkörpern und Einsatzelementen derart voneinander verschieden, dass das dahingehende Schellensystem teuer und aufwendig in der Herstellung ist und im übrigen erklärt sich der jeweils gewünschte Aufbau an verschiedenen Einsatzelementen zur Realisierung der Rohrschelle mit im Durchmesser unterschiedlichen Aufnahmekanälen nicht derart einfach, als dass ein Durchschnittsmonteur vor Ort ohne Schwierigkeiten die Montage immer sicher gewährleisten kann.

Durch die US-A-5 697 194 ist ein gattunggemäßes Einsatzelement für Rohrschellen bekannt, das zwischen einander gegenüberliegenden Spannkörpern aufnehmbar ist und zumindest eine Klemmfläche zur Anlage an einem in der Schelle zu fixierenden Bauelement sowie mindestens eine Abstützfläche aufweist, die durch Anlage am zugehörigen Spannkörper die Übertragung einer Klemmkraft vom Spannkörper auf die Klemmfläche des Einsatzelementes ermöglicht, wobei das Einsatzelement aus mehreren, über lösbare Trennstellen miteinander verbundenen Teilelementen gebildet ist, die an den Trennstellen derart faltbar sind, dass Klemmflächen eines Teilelementes an Abstützflächen eines jeweils anschließenden Teilelementes anliegen.

Bei der bekannten Lösung sind die einzelnen Teilelemente bei einer Ausführungsform (vgl. Fig. 12 bis 14) aus konzentrisch zueinander angeordneten und jeweils benachbart aneinanderliegenden Ringen, bevorzugt aus elastomerem Material hergestellt, gebildet, die an einer ihrer freien nach außen hin weisenden Stirnseiten über Trennstellen miteinander ablösbar verbunden und insoweit gefaltet aufeinandergelegt sind. Je nach aufzunehmendem Rohrdurchmesser werden dann die nicht benötigten elastomeren Ring-Teilelemente aus dem Verbund von Hand entfernt und entsorgt. Im übrigen weist der Ringverbund nach außen hin einzelne auf radialem Abstand zueinander gehaltene Vorsprünge auf, an denen Spannringsegmente angreifen, die zwischen Einstellflanschen aufgenommen, bei deren Zustellbewegung mittels Schraubverbindungen einer Spanneinrichtung die elastomeren Ring-Teilelemente vorgespannt werden für eine pressende und mithin abdichtende Festlegung des in der Mitte der dahingehenden Teilelementanordnung eingesetzten Rohres.

Im Hinblick auf den festzulegenden, variierenden Rohrdurchmesserbereich, der ebenso kleine wie relativ große Rohrdurchmesser mit abdecken soll, ist durch entsprechendes Entfernen der elastomeren, ringförmigen Teilelemente bei Anwendung des Einsatzelementes für große Rohrdurchmesser mit einer entsprechenden Abfallmenge zu rechnen, was mit entsprechenden Herstell- und Entsorgungskosten einhergeht. Werden versehentlich zu viel oder zu wenig Teilelemente bezogen auf einen definierten Rohrdurchmesser entfernt, sind entsprechende Zusatzarbeiten notwendig durch erneutes Entfernen weiterer Teilelemente bzw. nachträgliches Anbringen der abgelösten Teilelementen zur Durchmesserreduzierung, so dass die bekannte Lösung vor Ort entsprechend schwer montierbar ist, was insbesondere auch dann gilt, wenn durch Umgebungsverschmutzungen, wie Hydrauliköl od.dgl., die Montage ohnehin erschwert ist. Auch baut die bekannte Lösung sowohl in axialer als auch in radialer Einbaurichtung gesehen relativ groß auf.

Vergleichbar aufbauende Schellenlösungen mit konzentrisch oder elliptisch aufgebauten ringsementartigen Teilelementen, die wiederum mittig eine Durchgriffsöffnung freigeben für die Aufnahme eines festzulegenden Bauteils, wie beispielsweise eines Fluidrohres, sind auch Gegenstand der DE 80 30 416 U1 bzw. der DE 103 133 06 B3.

Ausgehend von diesem Stand der Technik liegt der Erfindung die Aufgabe zugrunde, ein Einsatzelement zur Verfügung zu stellen, das eine universelle Verwendung einer betreffenden Rohrschelle ermöglicht, die sich im übrigen kostengünstig realisieren läßt und sich als einfach montierbar vor Ort erweist.

Erfindungsgemäß ist diese Aufgabe durch ein Einsatzelement für Rohrschellen gelöst, das die Merkmale des Patentanspruches 1 in seiner Gesamtheit aufweist.

Dadurch, dass gemäß dem kennzeichnenden Teil des Patentanspruches 1 die Abstützflächen und die Klemmflächen der Teilelemente jeweils zwei Teilflächen aufweisen, die bei sämtlichen Teilelementen in jeweils gleicher Neigung zueinander verlaufen und an der Klemmfläche miteinander einen stumpfen Winkel einschließen, um einen das zu fixierende Bauelement teilweise umfassenden Klemmkanal zu bilden, besteht die Möglichkeit, Teilelemente, die bei einem gegebenem Montagevorgang nicht benötigt werden, an den Trennstellen vom Verbund zu lösen. Je nachdem, ob mehr oder weniger Teilelemente aus dem Verbund herausgenommen werden, verbleibt somit ein mehr oder weniger großer Klemmbereich zwischen den Spannkörpern, d.h. die betreffende Rohrschelle läßt sich so dem benötigten Durchmesserbereich anpassen. Dadurch gelingt es, mit wenigen gleichen Bauteilen im Gegensatz zu den bekannten Lösungen mit einer Vielzahl an konzentrisch oder elliptisch zueinander angeordneten ringartigen Teilelementen, eine große Bandbreite an Durchmessern von Bauteilen fixieren zu können.

Die Trennstellen können durch Filmscharniere gebildet sein, die die Gelenkstellen für das Zusammenfalten der Teilelemente bilden. Bei entsprechend dünner Ausbildung der Filmscharniere können nicht benötigte Teilelemente leicht und bequem entfernt werden.

Vorzugsweise ist für die Anlage an jedem Spannkörper je ein aus Teilelementen gebildetes Einsatzelement vorgesehen, wobei in besonders vorteilhafter Weise beide Einsatzelemente gleich ausgebildet sein können.

Um die bei gefaltetem Einsatzelement aneinander anliegenden Teilelemente gegen Kräfte zu sichern, die durch axiale Verschiebungen des fixierten Bauelementes entstehen, können Abstützflächen und Klemmflächen der Teilelemente mit zueinander komplementären Unregelmäßigkeiten versehen sein, die im gefalteten Zustand eine formschlüssige Sicherung der aneinander angrenzenden Teilelemente gegen Relativbewegungen bilden. Hierbei kann es sich um vorspringende Fixierkörper und diese aufnehmende Vertiefungen handeln.

Gegenstand der Erfindung ist auch eine Rohrschelle für die Aufnahme eines erfindungsgemäßen Einsatzelementes, die die Merkmale des Patentanspruches 8 aufweist.

Um die Spannkörper in aneinander anliegender Lage lösbar zu sichern, können lösbare Rastmittel an den Spannkörpern vorgesehen sein. Eine solche Verrastung kann für die Vormontage der zu fixierenden Bauelemente vorgesehen sein, wobei in einem solchen Fall eine Spanneinrichtung zum endgültigen Festspannen der Spannkörper in aneinander anliegender Lage vorhanden sein kann. Bei entsprechend stark ausgebildeter, gegenseitiger Verrastung der Spannkörper kann in bestimmten Anwendungsfällen kann auch eine zusätzliche Spanneinrichtung entfallen.

Nachstehend ist die Erfindung anhand eines in der Zeichnung dargestellten Ausführungsbeispieles im Einzelnen erläutert. Es zeigen:
- Fig. 1 eine auseinandergezogen gezeichnete perspektivische Schrägansicht einer Rohrschelle mit einem Paar eingesetzter Einsatzelemente gemäß einem Ausführungsbeispiel der Erfindung;
- Fig. 2 eine gegenüber Fig. 1 in größerem Maßstab gezeichnete perspektivische Schrägansicht lediglich des einen der in Fig. 1 gezeigten Einsatzelemente in teilweise zusammengefaltetem Zustand;
- Fig. 3 eine in gleichem Maßstab wie Fig. 2 gezeichnete perspektivische Schrägansicht des Einsatzelementes, wobei dessen Teilelemente in aufgefaltetem Zustand gezeigt sind;
- Fig. 4 eine gegenüber Fig. 2 und 3 in etwas kleinerem Maßstab gezeichnete perspektivische Schrägansicht eines der Spannkörper der Rohrschelle von Fig. 1 und
- Fig. 5 eine in etwa gleichem Maßstab wie Fig. 1 gezeichnete perspektivische Schrägansicht der Rohrschelle in geschlossenem Zustand jedoch ohne in der Schelle befindliche Einsatzelemente.

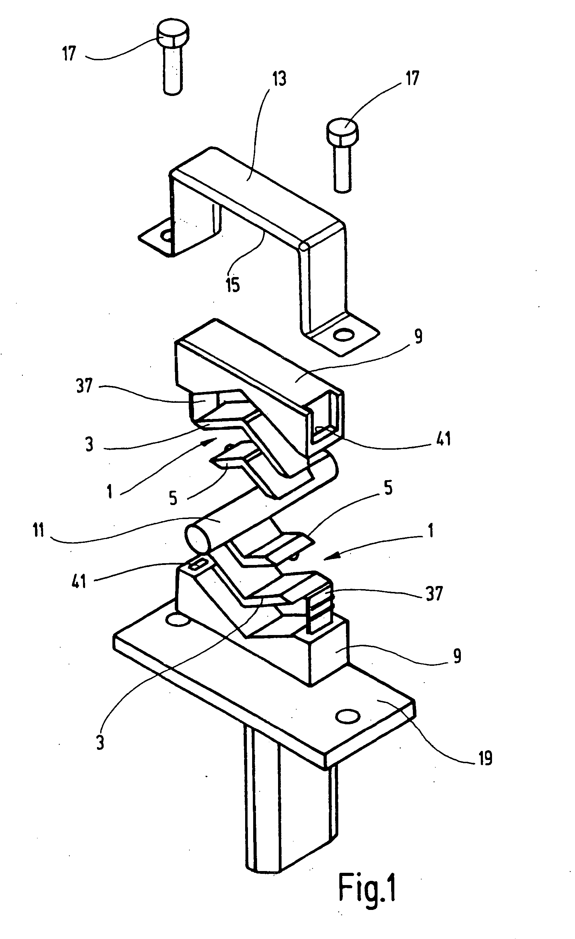

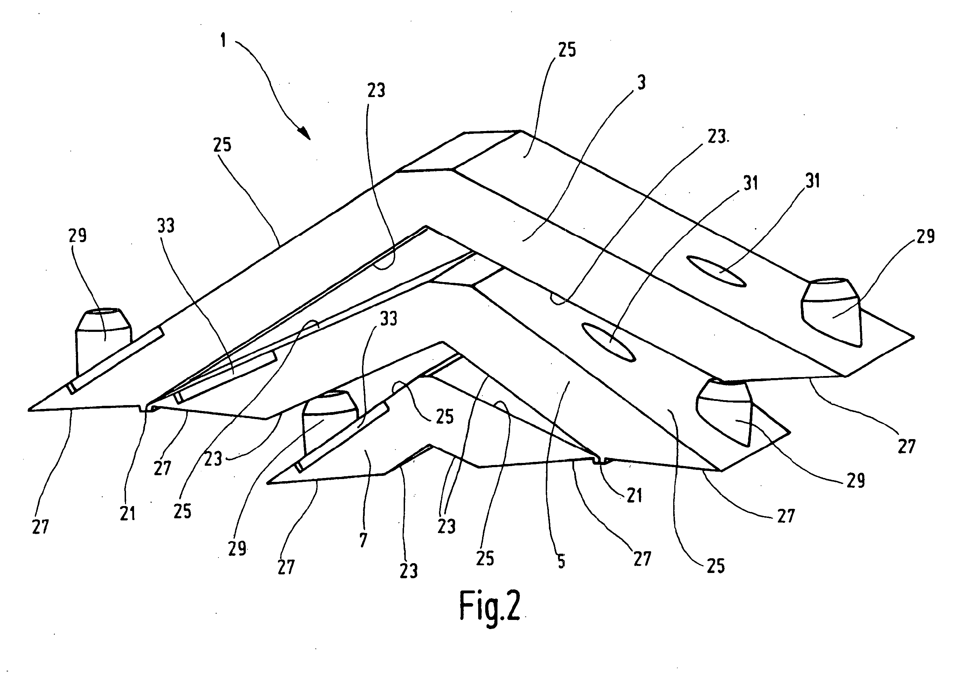

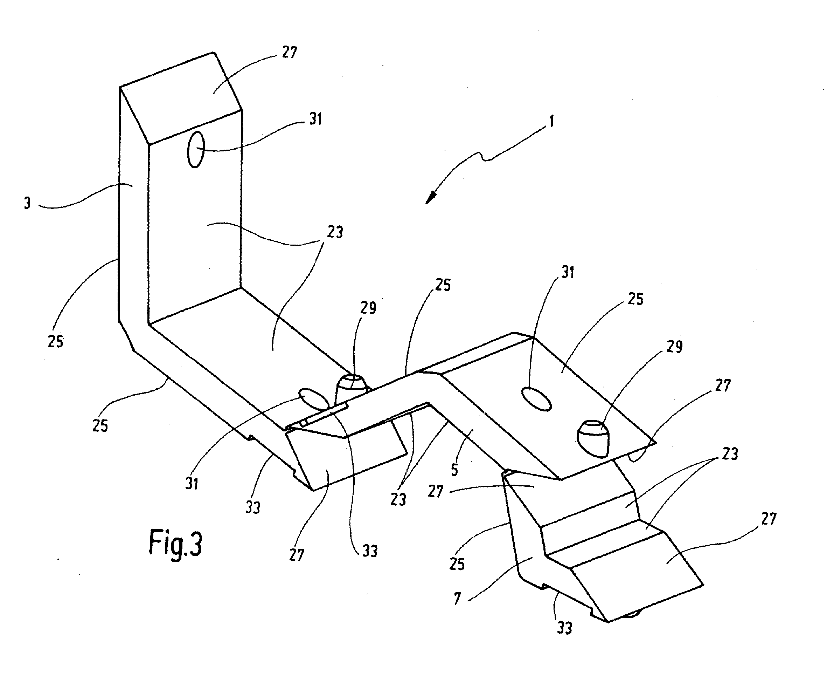

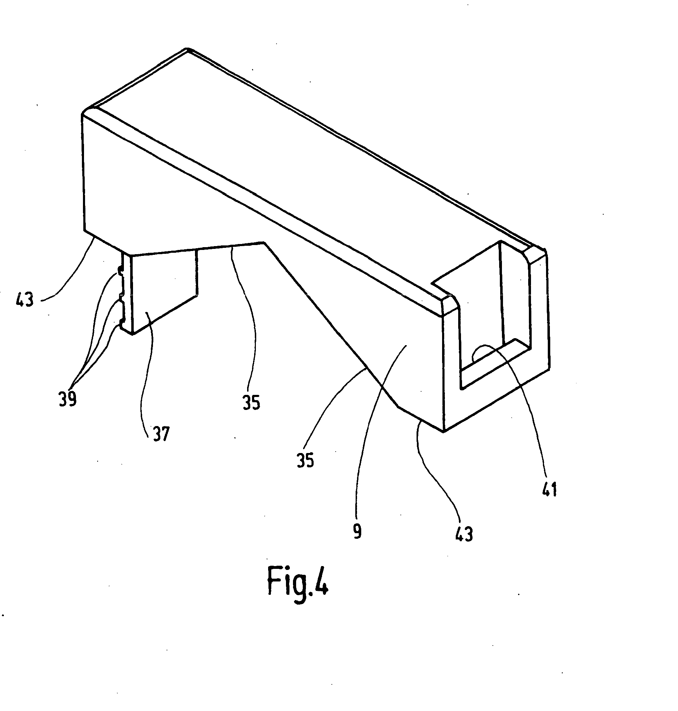

Fig. 1 zeigt in auseinandergezogen gezeichneter Darstellung die Bestandteile einer Rohrschelle mit einem Paar von Einsatzelementen 1 gemäß einem Ausführungsbeispiel der Erfindung. Bei den Einsatzelementen 1 handelt es sich um einen Verbund aus Teilelementen, die in Fig. 2 und 3 näher dargestellt und mit den Bezugszahlen 3, 5 und 7 bezeichnet sind. Bei dem Beispiel von Fig. 1 befinden sich zwischen Spannkörpern 9 lediglich die Teilelemente 3 und 5 des Einsatzelementes 1, um zwischen den Spannkörper 9 einen Klemmkanal zu definieren, der für die Fixierung eines strang- oder rohrförmigen Bauelementes 11 mit dem in Fig. 1 gezeigten Außendurchmesser geeignet ist. Die Spannkörper 9, die Anlageflächen (35 in Fig. 4) für das Paar der Einsatzelemente 1 bilden, sind beide gleich ausgebildet und weisen die in Fig. 4 näher gezeigte Gestalt auf.

Bei dem Beispiel von Fig. 1 ist zum gegenseitigen Verspannen der Spannkörper 9 eine Spanneinrichtung in Form eines Spannbügels 13 vorgesehen, der gewölbte Ränder 15 zur seitlichen Einfassung der betreffenden Spannkörper 9 aufweist. Der Spannbügel 13 ist durch Halteschrauben 17 mit einer mit Innengewinde versehenen Trägerplatte 19 verschraubbar.

Fig. 2 und 3 zeigen das Einsatzelement 1 als Verbund aus den drei Teilelementen 3, 5 und 7, die über filmscharnierartig ausgebildete Trennstellen 21 miteinander zusammenhängen, die sowohl Faltachsen für das Zusammenfalten (Fig. 2) oder Auseinanderfalten (Fig. 3) der Teilelemente 5 und 7 als auch lösbare Trennstellen für das Herausnehmen nicht benötigter Teilelemente 5 oder 7 aus dem Verbund darstellen.

Jedes der Teilelemente 3, 5 und 7 bildet auf der dem zu bildenden Klemmkanal zugewandten Seite eine Klemmfläche aus zwei im Winkel zueinander geneigten, ebenen Teilflächen 23, die, wie am deutlichsten aus Fig. 2 zu ersehen ist, miteinander jeweils den gleichen stumpfen Winkel einschließen.

Die entgegengesetzte, äußere, dem betreffenden Spannkörper 9 zugewandte Seite der Teilelemente 3, 5 und 7 bildet eine Abstützfläche, die ebenfalls aus ebenen Teilflächen 25 gebildet ist, die zueinander in dem gleichen Winkel geneigt sind wie die Teilflächen 23 der Klemmflächen. In dem vollständig zusammengefalteten Zustand, wenn also die Teilelemente 3, 5 und 7 noch stärker aneinander angenähert sind als dies in Fig. 2 gezeigt ist, liegen Teilflächen 23 und 25 bündig aneinander an. Bei diesem Zustand liegen ebene Endflächen 27, die bei den Teilelementen 3, 5 und 7 jeweils die äußeren Enden der Teilflächen 25 und 23 miteinander verbinden, bündig aneinander an und definieren die Trennebene zwischen einem Paar der zwischen den Spannkörpern 9 befindlichen Einsatzelemente 1. Die ebenen Endflächen 27 sind dadurch gebildet, dass bei jedem Teilelement 3, 5 und 7 jeweils die Längserstreckung der Abstützfläche, gebildet durch die Teilflächen 25, größer ist als die Länge der Klemmfläche, gebildet durch die Teilflächen 23. Wie aus Fig. 2 deutlich zu ersehen ist, vergrößert sich die lichte Weite des zwischen den Einsatzelementen 1 gebildeten Klemmkanales, wenn das Teilelement 7 oder die Teilelemente 7 und 5 aus dem Verbund herausgenommen sind, oder anders ausgedrückt, ergibt sich der größte, bei Benutzung des Einsatzelementes 1 definierte Klemmkanal, wenn lediglich das Teilelement 3 Verwendung findet.

Um die Teilelemente 3, 5 und 7 gegen Axialkräfte gegenseitig zu verriegeln, die durch ein betreffendes, in der Schelle fixiertes Bauelement 11 erzeugt werden, sind an den Teilflächen 25 als Oberflächenunregelmäßigkeit 29 vorspringende Fixierkörper 29 vorgesehen, die mit zugeordneten Vertiefungen als weitere Oberflächenunregelmäßigkeit 31 in formschlüssigen Eingriff kommen.

Bei entsprechend dünner Gestaltung der Filmscharniere lassen sich nicht benötigte Teilelemente 7 und 5 leicht und bequem aus dem Verbund des Einsatzelementes 1 ablösen, beispielsweise wenn das Filmscharnier bei aus einem Kunststoffwerkstoff pressgeformten Einsatzelement 1 oder bei einem aus einem metallischen Werkstoff geformten Einsatzelement 1 durch eine dünne Folie gebildet ist. Um das Ablösen zu erleichtern, sind zusätzlich seitliche Taschen 33 in Form randseitiger Ausnehmungen vorgesehen, an denen ein Hilfswerkzeug, beispielsweise eine Schraubendreherklinge, angesetzt werden kann.

Fig. 4 verdeutlicht die Form der Spannkörper 9. Wie ersichtlich, handelt es sich um einen Formkörper mit einer quer zum Klemmkanal gemessenen solchen Länge, dass er eine Einfassung für das die größte Länge aufweisende Teilelement 3 des Einsatzelementes 1 bildet. Wie ebenfalls ersichtlich, sind die Anlageflächen 35, an denen die Teilflächen 25 der Abstützfläche des Teilelemente 3 am Spannkörper 9 zur Anlage kommen, in dem gleichen Winkel zueinander geneigt wie die Teilflächen 25, so dass das Einsatzelement 1 ganzflächig und bündig anliegt.

An die äußeren Enden der Anlageflächen 35 schließen sich Endflächenteile 43 an, die die Trennebene der aneinanderliegenden Spannkörper 9 definieren und mit den Endflächen 27 des eingesetzten Einsatzelementes 1 koplanar sind.

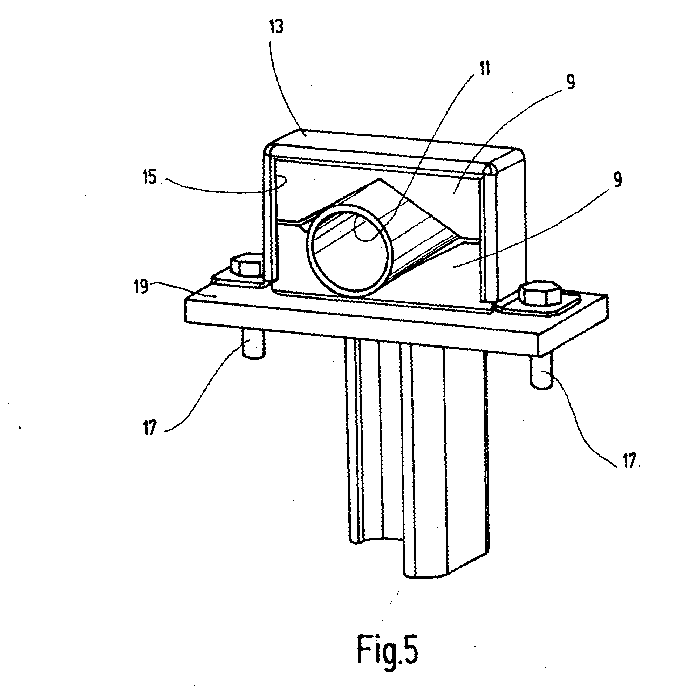

Die Spannkörper 9 weisen für ihre gegenseitige Verrastung am einen Endbereich jeweils eine elastische Rastlasche 37 mit vorspringenden Rasten 39 und am entgegengesetzten Endbereich eine Schlitzöffnung 41 zum Einstekken der Lasche 37 und zur Bildung einer Verrastung auf. Die gegenseitige Verrastung der Spannkörper 9 kann zur Vormontage dienen, wobei die eigentliche Fixierung des Bauelementes 11 im Klemmkanal durch Verspannen mittels des Spannbügels 13 erfolgt. Bei entsprechend ausgebildeter Verrastung und in Fällen, wo lediglich eine geringe Haltekraft zur Fixierung des Bauelementes 11 erforderlich ist, kann gegebenenfalls auf ein Verspannen durch den Spannbügel 13 verzichtet werden. Da die Anlageflächen 35 an den Spannkörpern 9 zueinander im gleichen Winkel geneigt sind wie die Teilflächen 23 und 25 an den Teilelementen 3, 5 und 7 des Einsatzelementes 1, können die Anlageflächen 35 der Spannkörper 9, ohne dass ein Einsatzelement 1 eingesetzt wäre, als Klemmflächen zur Bildung eines Klemmkanales für ein Bauelement 11 entsprechend großen Außendurchmessers fungieren. Fig. 5 zeigt die Verwendung der Rohrschelle ohne eingesetztes Einsatzelement 1, wobei ein Bauelement 11 in Form eines Rohres mit entsprechend großem Durchmesser fixiert ist.

## Patentansprüche

1. Einsatzelement (1) für Rohrschellen, das zwischen einander gegenüberliegenden Spannkörpern (9) aufnehmbar ist und zumindest eine Klemmfläche zur Anlage an einem in der Schelle zu fixierenden Bauelement (11) sowie mindestens eine Abstützfläche aufweist, die durch Anlage am zugehörigen Spannkörper (9) die Übertragung einer Klemmkraft vom Spannkörper (9) auf die Klemmfläche des Einsatzelementes (1) ermöglicht, wobei das Einsatzelement (1) aus mehreren, über lösbare Trennstellen (21) miteinander verbundenen Teilelementen (3, 5, 7) gebildet ist, die an den Trennstellen (21) derart faltbar sind, dass Klemmflächen eines Teilelementes (3, 5, 7) an Abstützflächen eines jeweils anschließenden Teilelementes (5, 7) anliegen, **dadurch gekennzeichnet, dass** die Abstützflächen und die Klemmflächen der Teilelemente (3, 5, 7) jeweils zwei Teilflächen (25 bzw. 23) aufweisen, die bei sämtlichen Teilelementen (3, 5, 7) in jeweils gleicher Neigung zueinander verlaufen und an der Klemmfläche miteinander einen stumpfen Winkel einschließen, um einen das zu fixierende Bauelement (11) teilweise umfassenden Klemmkanal zu bilden.

2. Einsatzelement nach Anspruch 1, **dadurch gekennzeichnet, dass** für die Anlage an jedem Spannkörper (9) je ein aus Teilelementen (3, 5, 7) gebildetes Einsatzelement (1) vorgesehen ist.

3. Einsatzelement nach Anspruch 2, **dadurch gekennzeichnet, dass** beide Einsatzelemente (1) gleich ausgebildet sind.

4. Einsatzelement nach einem der Ansprüche 1 bis 3, **dadurch gekennzeichnet, dass** die Abstützflächen der Teilelemente (3, 5, 7), gemessen in der zum Klemmkanal quer verlaufenden Längsrichtung, eine größere Erstreckung besitzen als ihre Klemmflächen und dass die Länge der Klemmflächen jeweils der Länge der Abstützfläche des benachbarten Teilelementes (5, 7) entspricht.

5. Einsatzelement nach Anspruch 4, **dadurch gekennzeichnet, dass** die Trennstellen (21) zwischen den Teilelementen (3, 5, 7) durch Filmscharniere (21) gebildet sind, die jeweils ein Ende der Klemmfläche eines Teilelementes (3, 5, 7) mit dem Ende der Abstützfläche eines sich jeweils anschließenden Teilelementes (5, 7) verbinden und zueinander parallele Faltachsen definieren, die sich senkrecht zur Längsrichtung erstrecken.

6. Einsatzelement nach Anspruch 5, **dadurch gekennzeichnet, dass** die Enden der Abstützflächen und Klemmflächen jedes Teilelementes (3, 5, 7) durch ebene Endflächen (27) verbunden sind, die sich bei dem mit den Spannkörpern (9) vereinigten Zustand in der Trennebene derselben erstrecken.

7. Einsatzelement nach einem der Ansprüche 1 bis 6, **dadurch gekennzeichnet, dass** Abstützflächen und Klemmflächen der Teilelemente (3, 5, 7) mit zueinander komplementären Oberflächenunregelmäßigkeiten (29, 31) versehen sind, die im gefalteten Zustand eine formschlüssige Sicherung der aneinander angrenzenden Teilelemente (3, 5, 7) gegen Relativbewegungen bilden.

8. Rohrschelle für die Aufnahme von Einsatzelementen gemäß einem der Ansprüche 1 bis 7, mit einander gegenüberliegenden Spannkörpern (9), die Anlageflächen (35) für zueinander im Winkel geneigt verlaufende Teilflächen (25) der Abstützfläche eines anliegenden Teilelementes (3) aufweisen, wobei die Anlageflächen (35) der Spannkörper (9) zueinander im gleichen Winkel geneigt sind wie die Teilflächen (25) des Teilelementes (3).

9. Rohrschelle nach Anspruch 8, **dadurch gekennzeichnet, dass** die Spannkörper (9) lösbare Rastmittel (37, 39, 41) für ihre Sicherung in aneinander anliegender Lage aufweisen.

10. Rohrschelle nach Anspruch 8 oder 9, **dadurch gekennzeichnet, dass** eine Spanneinrichtung (13, 17) zum Festspannen der Spannkörper (9) in aneinander anliegender Lage vorhanden ist.

## Claims

1. An insert element (1) for pipe clamps which can be accommodated between opposite clamping bodies (9) and has at least one clamping surface for bearing against a component (11) to be fixed in the clamp and has at least one supporting surface which, by bearing against the associated clamping body (9), enables a clamping force to be transmitted from the clamping body (9) to the clamping surface of the insert element (1), the insert element (1) being formed from a plurality of partial elements (3, 5, 7) which are connected to one another via releaseable separating points (21) and which can be folded at the separating points (21) such that clamping surfaces of a partial element (3, 5, 7) bear against supporting surfaces of a respective adjacent partial element (5, 7), **characterised in that** the supporting surfaces and the clamping surfaces of the partial elements (3, 5, 7) respectively have two partial surfaces (25 and 23) which respectively extend with all of the partial elements (3, 5, 7) at the same incline in relation to one another, and on the clamping surface enclose an obtuse angle with one another in order to form a clamping channel partially encompassing the component (11) to be fixed.

2. The insert element according to Claim 1, **characterised in that** for the bearing against every clamping body (9) an insert element (1) respectively formed from partial elements (3, 5, 7) is provided.

3. The insert element according to Claim 2, **characterised in that** both insert elements (1) are designed in the same way.

4. The insert element according to any of Claims 1 to 3, **characterised in that** measured in the longitudinal direction extending laterally to the clamping channel, the supporting surfaces of the partial elements (3, 5, 7) have a greater extension than their clamping surfaces and that the length of the clamping surfaces corresponds respectively to the length of the supporting surface of the adjacent partial element (5, 7).

5. The insert element according to Claim 4, **characterised in that** the separating points (21) are formed by integral hinges (21) between the partial elements (3, 5, 7) and which respectively connect one end of the clamping surface of a partial element (3, 5, 7) to the end of the supporting surface of a respective adjacent partial element (5, 7) and define parallel fold axes in relation to one another which extend perpendicularly to the longitudinal direction.

6. The insert element according to Claim 5, **characterised in that** the ends of the supporting surfaces and clamping surfaces of each partial element (3, 5, 7) are connected by level end surfaces (27) which in the state united with the clamping bodies (9) extend in the separating plane of the latter.

7. The insert element according to any of Claims 1 to 6, **characterised in that** the supporting surfaces and clamping surfaces of the partial elements (3, 5, 7) are provided with surface irregularities (29, 31) complementary to one another which in the folded state form formlocking securing of the adjacent partial elements (3, 5, 7) against relative movements.

8. A pipe clamp for accommodating insert elements according to any of Claims 1 to 7, having opposing clamping bodies (9) which have bearing surfaces (35) for partial surfaces (25) inclined at an angle in relation to one another of the supporting surface of an adjacent partial element (3), the bearing surfaces (35) of the clamping bodies (9) being inclined in relation to one another at the same angle as the partial surfaces (25) of the partial element (3).

9. The pipe clamp according to Claim 8, **characterised in that** the clamping bodies (9) have releaseable securing means (37, 39, 41) for securing them in a position bearing against one another.

10. The pipe clamp according to Claim 8 or 9, **characterised in that** a clamping device (13, 17) is provided for securely clamping the clamping bodies (9) in a position bearing against one another.

## Revendications

1. Elément (1) d'insertion pour des colliers d'attache, qui peut être reçu entre des pièces (9) de serrage et qui a au moins une surface de serrage pour l'application à un élément (11) à immobiliser dans le collier, ainsi qu'au moins une surface d'appui qui rend possible, par application à la pièce (9) de serrage associée, la transmission d'une force de serrage de la pièce (9) de serrage à la surface de serrage de l'élément (1) d'insertion, l'élément (1) d'insertion étant formé de plusieurs sous-éléments (3, 5, 7) reliés entre eux par des points (21) de séparation pouvant être défaits, sous-éléments qui peuvent être pliés aux points (21) de séparation de manière à ce que des surfaces de serrage d'un sous-élément (3, 5, 7) s'appliquent à des surfaces d'appui d'un sous-élément (5, 7) se raccordant respectivement, **caractérisé en ce que** les surfaces d'appui et les surfaces de serrage ont respectivement deux sous-surfaces (25 et 23) qui, pour tous les sous-éléments (3, 5, 7), s'étendent les uns par rapport aux autres dans respectivement la même inclinaison et font entre eux sur la surface de serrage un angle obtus, pour former un canal de serrage enserrant en partie l'élément (11) à immobiliser.

2. Elément d'insertion suivant la revendication 1, **caractérisé en ce qu'**il est prévu respectivement un élément (1) d'insertion formé de sous-éléments (3, 5, 7) pour l'application à chaque pièce (9) de serrage.

3. Elément d'insertion suivant la revendication 2, **caractérisé en ce que** deux éléments (1) d'insertion sont identiques.

4. Elément d'insertion suivant l'une des revendications 1 à 3, **caractérisé en ce que** les surfaces d'appui des sous-éléments (3, 5, 7) ont, mesuré dans la direction longitudinale s'étendant transversalement au canal de serrage, une étendue plus grande que leurs surfaces de serrage et **en ce que** la longueur des surfaces de serrage correspond respectivement à la longueur de surface d'appui du sous-élément (5, 7) voisin.

5. Elément d'insertion suivant la revendication 4, **caractérisé en ce que** les points (21) de séparation entre les sous-éléments (3, 5, 7) sont formés par des charnières (21) à film, qui relient respectivement une extrémité de la surface de serrage d'un sous-élément (3, 5, 7) à l'extrémité de la surface d'appui et d'un sous-élément (5, 7) se raccordant respectivement et qui définissent les unes par rapport aux autres des axes de pliage parallèles, s'étendant perpendiculairement à la direction longitudinale.

6. Elément d'insertion suivant la revendication 5, **caractérisé en ce que** les extrémités des surfaces d'appui et des surfaces de serrage de chaque sous-élément (3, 5, 7) sont reliées par des surfaces (27) d'extrémité planes, qui, à l'état réuni aux pièces (9) de serrage, s'étendent dans le plan de séparation de celles-ci.

7. Elément (1) d'insertion suivant l'une des revendications 1 à 6, **caractérisé en ce que** des surfaces d'appui et des surfaces de serrage des sous-éléments (3, 5, 7) sont munies (29, 31) d'irrégularités de surface complémentaires les unes des autres qui, à l'état plié, empêchent, par complémentarité de forme, des sous-éléments (3, 5, 7) voisins les uns des autres de se déplacer relativement.

8. Collier d'attache pour la réception d'éléments d'insertion suivant l'une des revendications 1 à 7, comprenant des pièces (9) de serrage opposées l'une à l'autre, qui ont des surfaces (35) d'application pour des sous-surfaces (25), s'étendant de manière inclinée suivant un angle les unes par rapport aux autres, de la surface d'appui d'un sous-élément (3) appliqué, les surfaces (35) d'application des pièces (9) de serrage étant inclinées les unes par rapport aux autres du même angle que les sous-surfaces (25) du sous-élément (3).

9. Collier d'attache suivant la revendication 8, **caractérisé en ce que** les pièces (9) de serrage ont des moyens (37, 39, 41) amovibles d'encliquetage pour les fixer dans une position les appliquant l'une sur l'autre.

10. Collier d'attache suivant la revendication 8 ou 9, **caractérisé en ce qu'**il est prévu un dispositif (13, 17) de serrage pour bloquer les pièces (9) de serrage dans une position où elles s'appliquent l'une à l'autre.
